# FASCICULE DE BREVET EUROPEEN

(11) **EP 1 945 858 B1**
(45) Date de publication et mention de la délivrance du brevet: **18.07.2018**
(21) Numéro de dépôt: 06793464.6
(22) Date de dépôt: 12.09.2006
(51) Int. Cl.: E01B 11/52, B23K 23/00, E01B 29/42

(54) **MOULE POUR LA SOUDURE ALUMINOTHERMIQUE DE RAILS DE CHEMIN DE FER**
SCHWEISSFORM FÜR DIE ALUMINOTHERMISCHE SCHWEISSUNG VON SCHIENEN
MOLD FOR ALUMINOTHERMAL WELDING OF RAILWAY TRACKS

(30) Priorité: 12.09.2005 FR 0509256
(43) Date de publication de la demande: 23.07.2008
(73) Titulaire: Railtech International, 59590 Raismes (FR)
(72) Inventeur: BOMMART, Patrick, F-92500 Rueil Malmaison (FR); THURU, Jean-Jacques, F-59230 Saint-Amand-les-Eaux (FR); WINIAR, Lionel, F- 59790 RONCHIN (FR)
(74) Mandataire: Regimbeau
(86) Numéro de dépôt international: PCT/EP2006/066297
(87) Numéro de publication internationale: WO 2007/031528

(56) Documents cités:
- WO-A-97/25479
- US-A- 4 190 228

## Description

La présente invention concerne un moule pour la soudure aluminothermique de rails de chemin de fer, du type comportant plusieurs pièces en matériau réfractaire rigide, susceptibles d'être assemblées temporairement autour de deux abouts de rail à souder en définissant chacune, par des parties de surface respectives, mutuellement adjacentes :
- une partie respective d'une empreinte de moulage, ouverte vers le haut, agencée pour recevoir par coulée un métal de soudure à l'état liquide et enveloppant les deux abouts, un intervalle ménagé entre eux et une première zone de chaque rail, immédiatement voisine de l'about correspondant, pour communiquer une forme déterminée au métal de soudure pendant sa solidification,
- une partie respective de chacune de deux portées continues agencées pour prendre appui contre une deuxième zone de chaque rail immédiatement voisine de la première zone de celui-ci, à l'opposé de l'about correspondant par rapport à cette première zone,
les parties de surfacé de chaque pièce qui définissent des parties des deux portées d'appui étant disposées respectivement de part et d'autre de la partie de surface de cette pièce qui définit une partie de l'empreinte de moulage et portant solidairement un revêtement compressible d'étanchéification dudit appui à l'encontre du métal de soudure à l'état liquide. Le document WO 97/25479 A1 décrit un tel moule. Un moule de ce type est exploité avec succès par la Demanderesse, depuis des décennies, dans un mode de réalisation dans lequel ses pièces, réalisées en sable aggloméré pour faciliter sa destruction après un usage unique, sont principalement au nombre de trois, à raison :
- de deux moitiés supérieures de moule, approximativement identiques, qui constituent l'image spéculaire l'une de l'autre par rapport à un plan longitudinal moyen commun aux deux rails à assembler et enveloppent, d'un côté respectif de ces deux rails, des zones de ces derniers et de l'intervalle ménagé entre eux qui correspondent au dessus du patin, à l'âme, au dessous et au côté du champignon, et
- d'une pièce inférieure ou de fond, présentant la forme générale d'une plaque qui complète les deux parties supérieures en dessous du patin des rails et de la zone correspondante de l'intervalle ménagé entre eux.

Ces trois pièces sont retenues entre elles, autour des rails à assembler, au moyen d'une carcasse métallique, quant à elle réutilisable.

Lors de son apparition, le moule ainsi réalisé a constitué un progrès considérable en permettant, du fait de la présence du revêtement compressible d'étanchéification, en pratique un feutre réfractaire fixé au moyen d'une colle réfractaire sur les portées d'appui, d'obtenir sans difficulté une étanchéité de l'empreinte à l'encontre d'un passage du métal de soudure à l'état liquide en limitant dans la plupart des cas le recours au lutage, à cet effet, à un simple complément de précaution.

Il est cependant apparu que les moules de ce type pouvaient être encore améliorés, en particulier pour permettre aux soudures réalisées par leur moyen de répondre encore mieux aux exigences de qualité imposées par le développement des voies de chemin de fer à grande vitesse.

Dans les moules du type précité tels qu'ils sont habituellement réalisés, le revêtement compressible d'étanchéification est limité aux parties de surface de chaque pièce qui définissent des parties des deux portées d'appui, respectivement de part et d'autre de la partie de surface sur cette pièce qui définit une partie de l'empreinte de moulage.

Ces différentes parties de surface de chaque pièce étant raccordées entre elles directement, par des arêtes entre lesquelles la partie qui définit une partie de l'empreinte de moulage présente une section arquée concave, le revêtement compressible d'étanchéification forme par rapport à cette partie, respectivement de part et d'autre de celle-ci, un gradin correspondant à l'épaisseur de ce revêtement, c'est-à-dire de l'ordre de 2 mm généralement.

Ce gradin se retrouve naturellement dans la forme donnée au métal de soudure pendant sa solidification, sous forme d'un gradin entre une face de la soudure présentant une section courbe convexe, complémentaire de la section courbe concave de la partie de surface de la pièce constitutive du moule qui définissait une partie de l'empreinte de moulage, et chacun des deux rails.

En particulier, la soudure obtenue se raccorde à chaque rail sous forme d'une arête à 90°, génératrice de concentration de contraintes et par conséquent de départs de criques entre la soudure et les rails.

En outre, il n'est pas rare que du sable du moule, placé au contact du métal de soudure à l'état liquide, s'incruste dans ce dernier, au détriment de l'état de surface de la soudure après démoulage par destruction du moule.

L'un des buts de la présente invention a été de remédier à ces inconvénients, et, à cet effet, la présente invention propose un moule du type indiqué en préambule, caractérisé en ce que la partie de surface de chaque pièce qui définit une partie de l'empreinte de moulage se raccorde directement à chacune des parties de surface de cette pièce qui définissent des parties des deux portées d'appui et porte également solidairement ledit revêtement compressible qui s'étend de façon continue de l'une à l'autre des parties de surface de cette pièce qui définissent des parties des deux portées d'appui.

Comme le comprendra aisément un Homme du métier, c'est alors, de façon tout à fait surprenante, le revêtement d'étanchéification qui, dans les parties de surface des différentes pièces du moule qui définissent une partie de l'empreinte de moulage, communique sa forme au métal de soudure pendant sa solidification, au cours de laquelle le métal de soudure reste, au moins pour l'essentiel, isolé du matériau constitutif du moule, tel qu'un sable aggloméré.

D'une part, les risques d'inclusion du matériau constitutif du moule sont ainsi pratiquement exclus et, d'autre part, le raccordement entre la soudure, mise en forme par le revêtement au niveau des parties de surface des différentes pièces constitutives du moule définissant une partie de l'empreinte de moulage, et les rails, contre lesquels le revêtement est en appui dans les parties de surface des différentes pièces constitutives du moule qui correspondent aux portées d'appui, s'effectue sans gradin, par l'intermédiaire d'une simple arête suffisamment douce pour limiter considérablement tout risque de concentration de contraintes et par conséquent de départ de criques à la jonction entre la soudure et les rails.

Naturellement, dans la mesure où le revêtement joue ainsi un rôle dans la conformation du métal de soudure dans sa solidification, il doit être fixé aussi efficacement que possible au matériau constitutif du moule. A cet effet, de préférence, le revêtement est fixé solidairement de façon continue, répartie sur la totalité des parties de surface de la pièce correspondante qui définissent respectivement une partie de l'empreinte et une partie des deux portées d'appui.

Il est cependant apparu aux essais que la réalisation d'un moule conformément à la présente invention apportait en outre d'autres avantages par rapport aux moules du même type tels qu'ils étaient connus antérieurement.

En particulier, il est apparu que le revêtement compressible d'étanchéification, dont on comprendra aisément qu'il est réalisé à partir de matériaux réfractaires tels qu'un feutre de fibres réfractaires liées par un liant réfractaire, collé au moyen d'une colle réfractaire aux parties de surface de la pièce correspondante, constitue un isolant thermique qui, en particulier lors du préchauffage du moule, préalablement à la coulée du métal en fusion, d'une part protège le matériau constitutif de ce moule, tel qu'un sable aggloméré, à l'encontre de tout risque de fusion ou autre endommagement qui risquerait d'entraîner un mélange de ce matériau avec le métal en fusion, et d'autre part limite les déperditions calorifiques vers le moule ; en d'autres termes, l'apport calorique réalisé du préchauffage reste, bien plus que dans l'Art antérieur, limité aux abouts de rail à souder, ce qui permet d'améliorer un échange ultérieur entre ce dernier et le métal de soudure à l'état liquide au moment de sa coulée dans l'empreinte de moulage.

Bien plus, si, selon un mode de mise en oeuvre préférée de la présente invention, on prévoit que le revêtement présente une température de fusion déterminée, intermédiaire entre une première température déterminée de préchauffage de l'empreinte et des abouts de rail, préalablement à la coulée du métal de soudure à l'état liquide dans l'empreinte, et une deuxième température déterminée du métal de soudure à l'état liquide à son arrivée dans l'empreinte lors de la coulée, la deuxième température étant supérieure à la première, on protège certes le revêtement de tout risque de fusion pendant le préchauffage, mais on provoque sa fusion en surface lorsque, au fur et à mesure de la coulée, le métal de soudure à l'état liquide vient à son contact, ce qui crée entre eux une pellicule qui permet d'obtenir un état de surface beaucoup plus lisse de la soudure et améliore non seulement son aspect mais également sa tenue dans le temps.

Il est bien entendu, cependant, que le revêtement ne doit pas constituer une entrave à l'arrivée du métal de soudure à l'état liquide dans l'empreinte et à cet effet, lorsque, de façon connue en elle-même, les pièces constitutives du moule comportent des moyens pour définir un canal de coulée du métal de soudure à l'état liquide dans l'empreinte, débouchant d'une part vers le haut dans une face supérieure du moule et d'autre part vers le bas dans une zone supérieure de l'empreinte, on prévoit de préférence que le revêtement soit interrompu en regard de l'embouchure du canal dans la zone supérieure de l'empreinte.

De même, lorsque les pièces constitutives du moule comportent au moins une pipe de remontée de gaz et de métal de soudure à l'état liquide, débouchant d'une part vers le haut dans ladite face supérieure du moule et d'autre part dans une zone inférieure de l'empreinte, comme il est également bien connu, on prévoit de préférence que le revêtement soit interrompu en regard de l'embouchure de la ou chaque pipe dans la zone inférieure de l'empreinte, afin de ne pas constituer d'obstacle à la remontée des gaz en particulier pendant le préchauffage et à celle du métal de soudure à l'état liquide au fur et à mesure que celui-ci emplit l'empreinte.

Par contre, lorsque la ou chaque pipe débouche en outre latéralement dans l'empreinte à un niveau intermédiaire de celle-ci, correspondant généralement au niveau du champignon des rails, on prévoit de préférence que le revêtement s'étende de façon continue en regard de l'embouchure de la ou chaque pipe dans l'empreinte audit niveau intermédiaire de celle-ci lorsque, en outre, la température de fusion du revêtement est intermédiaire entre les températures déterminées précitées de préchauffage de l'empreinte et des abouts de rail, d'une part, et du métal de soudure à l'état liquide à son arrivée dans l'empreinte lors de la coulée, d'autre part.

L'embouchure de la ou chaque pipe dans l'empreinte au niveau intermédiaire de celle-ci reste alors obturée par le revêtement pendant la totalité de l'opération de préchauffage, ce qui oblige les gaz chauds utilisés à cet effet, généralement générés au moyen d'un chalumeau introduit depuis la face supérieure du moule dans le canal de coulée, à descendre jusqu'au niveau du patin des rails avant de sortir de l'empreinte par les pipes, et par conséquent à chauffer au mieux la totalité des abouts à souder, au lieu de s'échapper au niveau intermédiaire de l'empreinte, en chauffant insuffisamment les abouts de rail au niveau du patin comme c'est le cas lorsqu'on utilise les moules de l'Art antérieur. On peut ainsi obtenir beaucoup plus rapidement une température homogène et satisfaisante des abouts de rail et par conséquent améliorer le rendement du préchauffage. Par contre, lorsque le métal à l'état liquide parvient ensuite, lors de la coulée, au niveau intermédiaire précité, le revêtement fond en regard de l'embouchure correspondante de la ou chaque pipe dans l'empreinte, ce qui ouvre la communication entre celle-ci et la ou chaque pipe et permet au métal de soudure à l'état liquide de s'équilibrer, d'une façon connue en elle-même, entre l'empreinte et la ou chaque pipe.

La présence du revêtement non seulement sur les parties de surface définissant les portées d'appui mais également entre celles-ci présente en outre un avantage lorsque le moule, affaibli mécaniquement par la présence, dans une grande proximité, d'au moins une pipe et du canal de coulée, tend à se fissurer entre ces derniers, ce qui crée lorsqu'on utilise les moules de l'Art antérieur des fuites de métal en fusion se traduisant ensuite par la présence, sur la soudure, de nervures fines que l'on appelle généralement « crêtes de coq ». En effet, d'une part, la présence du revêtement peut limiter cette tendance du moule à se fissurer et, d'autre part, une certaine élasticité du revêtement, généralement liée à sa compressibilité, permet d'éviter que d'éventuelles fissures autour de l'empreinte autorisent une fuite de métal de soudure à l'état liquide, le revêtement maintenant une continuité autour de l'empreinte.

La colle réfractaire avantageusement utilisée pour fixer le revêtement de façon continue, sur la totalité ou pratiquement la totalité des zones concernées, permet d'accroître encore cette protection du moule à l'encontre d'une fissuration, lorsque le moule est réalisé en sable aggloméré, en s'intégrant aux pores de celui-ci et en formant sur les différentes parties de surface couvertes par le revêtement, derrière celui-ci, une peau plus résistante mécaniquement et plus réfractaire que le sable lui-même.

Outre la présence caractéristique du revêtement compressible d'étanchéité non seulement sur les parties de surface correspondant à des portées d'appui des pièces du moule sur les rails à souder mais également sur les parties de surface définissant l'empreinte, un moule selon l'invention peut présenter par ailleurs toute conception connue et, en particulier, dans un moule selon l'invention comme dans un moule de l'Art antérieur, de façon préférée :
- lesdites pièces comportent deux pièces au moins approximativement identiques, destinées à être placées respectivement de part et d'autre de chaque rail et dont lesdites parties de surface sont conformées pour s'adapter au moins autour de l'âme, du dessus du patin, du dessous et du côté du champignon de chaque rail, et
- lesdites pièces comportent une troisième pièce, destinée à être placée en dessous de chaque rail et dont lesdites parties de surfaces sont conformées pour s'adapter en dessous du patin de chaque rail, dans des conditions telles que le revêtement de la troisième pièce soit jointif du revêtement desdites pièces, de façon étanche au métal de soudure à l'état liquide.

En dépit des avantages qui résultent des dispositions caractéristiques de la présente invention, la fabrication du moule est à peine plus coûteuse que celle des moules de l'Art antérieur puisqu'elle peut se limiter au seul surcoût lié à la plus grande surface couverte par le matériau de revêtement sur les deux pièces premièrement citées ; en effet, le matériau réfractaire prévu jusqu'à présent sur la troisième pièce se présente habituellement sous la forme d'un cadre rectangulaire générant une chute centrale habituellement jetée, alors que le revêtement correspondant, dans le cas d'une troisième pièce conforme à la présente invention, reprend les dimensions extérieures de ce cadre mais conserve sa continuité, correspondant à la chute ainsi habituellement jetée, à l'intérieur de son contour extérieur.

D'autres caractéristiques et avantages d'un moule selon l'invention ressortiront de la description ci-dessous, relative à un exemple non limitatif de réalisation, ainsi que des dessins annexés qui accompagnent cette description.

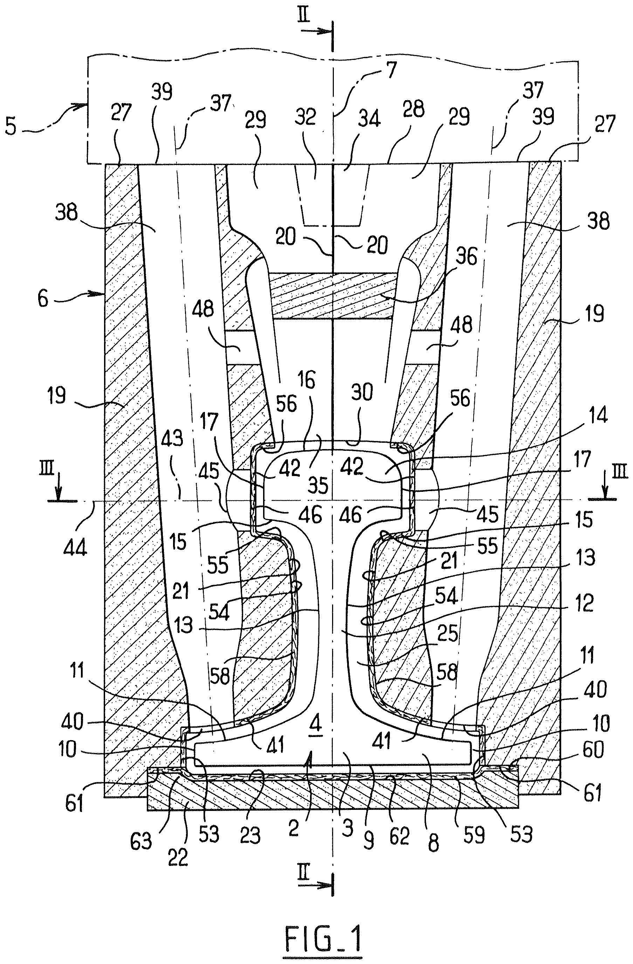

La figure 1 montre une vue d'un moule selon l'invention comportant trois pièces, selon le mode de réalisation actuellement préféré, directement inspiré du mode de réalisation des moules de l'Art antérieur, le moule étant vu à l'état assemblé sur les abouts de deux rails de chemin de fer à souder entre eux et en coupe par un plan transversal de symétrie entre ces deux abouts, tel que repéré en I-I à la figure 3.
La figure 2 montre une vue partielle, limitée au niveau de la partie inférieure de l'âme et au niveau du patin des rails, en coupe par un plan longitudinal de symétrie commun aux deux rails et repéré en II-II à la figure 1.
La figure 3 montre une vue en coupe par un plan longitudinal repéré en III-III à la figure 1 et perpendiculaire à la fois aux deux plans de coupe précités, à un niveau intermédiaire correspondant à celui du champignon des rails.

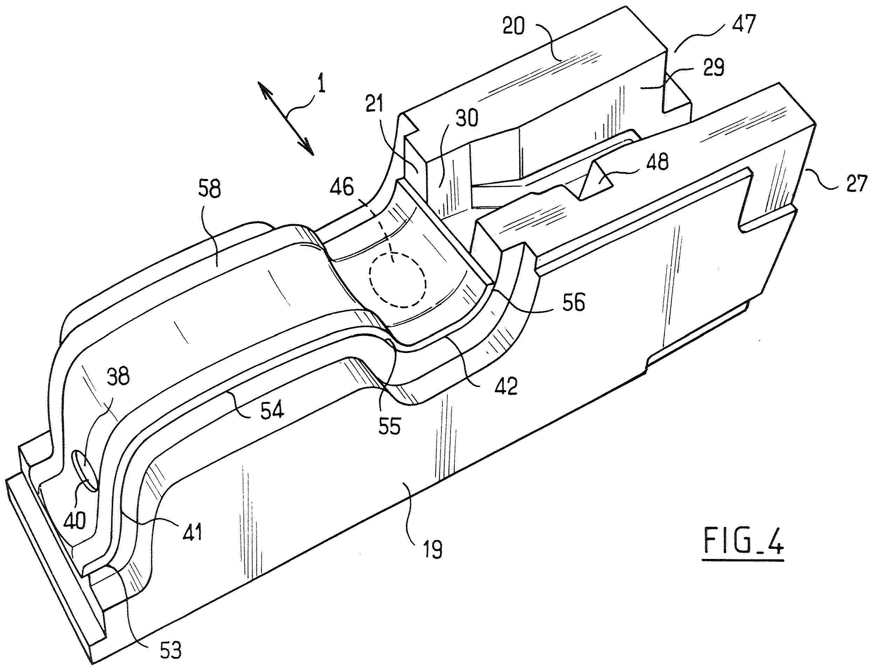

Les figures 4 et 5 montrent des vues en perspective respectivement de l'une des deux pièces au moins approximativement identiques constituant les moitiés supérieures du moule et de la troisième pièce de celui-ci ou pièce de fond.

On considère ici comme référence de longitudinalité une direction 1 que les deux rails 2 assemblés mutuellement par soudure présentent au moins à proximité immédiate des abouts 3 à souder mutuellement, qu'ils présentent l'un vers l'autre à cet effet et qui forment entre eux, comme il est bien connu en soi, un intervalle continu 4, de valeur longitudinale déterminée, destiné à être comblé par un métal de soudure fourni, à l'état liquide, par réaction aluminothermique à l'intérieur d'un creuset 5 dont la nature est indifférente au regard de la présente invention mais qui peut par exemple être du type commercialisé par la Demanderesse sous la dénomination « creuset jetable », destiné à un usage unique et par exemple posé directement sur le moule 6 selon l'invention, d'une façon connue en elle-même, décrite dans le brevet européen n° 0 407 240 auquel on se référera à cet égard.

Dans son mode de réalisation qui a été illustré et va être décrit à présent, le moule 6 selon l'invention est adapté à la soudure mutuelle de rails 2 de type Vignole, présentant une symétrie respective par rapport à un plan longitudinal 7 qui se confond avec le plan de coupe II-II, au moins de façon localisée à proximité des abouts 3, mais il est bien entendu que l'on pourrait également réaliser conformément à la présente invention des moules destinés à la soudure d'autres types de rails, et par exemple des rails à gorge destinés à être encastrés dans une chaussée, et un Homme du métier apportera sans difficulté, aux dispositions qui vont être décrites à présent, les modifications à apporter au moule 6 qui va être décrit pou l'appliquer à la soudure de différents autres types de rails.

On rappellera qu'un rail Vignole comporte trois parties longitudinales, respectivement symétriques par rapport au plan 7 et réalisées d'une seule pièce, à raison :
- d'un patin plat 8 d'orientation générale perpendiculaire au plan 7, délimité par une face inférieure plane ou dessous 9, qui coupe perpendiculairement le plan 7, par deux chants plans 10 approximativement parallèles au plan 7 et mutuellement symétriques par rapport à celui-ci, et par deux demi-faces supérieures ou dessus 11 concaves, mutuellement symétriques par rapport au plan 7 et raccordées chacune au dessous 9 du patin par un chant 10 respectif,
- d'une âme plate 12 disposée suivant le plan 7, au-dessus du patin 8, et délimitée respectivement de part et d'autre du plan 7 par des faces latérales 13 approximativement planes, approximativement parallèles au plan 7 et mutuellement symétriques par rapport à celui-ci, chacune de ces faces 13 se raccordant vers le bas à une demi face supérieure ou dessus 11 respective du patin 8, et
- d'un champignon 14 de section approximativement rectangulaire, oblongue perpendiculairement au plan 7 et définie par deux demi-faces inférieures ou dessous 15, concaves, mutuellement symétriques par rapport au plan 7 et à chacune desquelles l'une, respective, des faces latérales 13 de l'âme 12 se raccorde vers le haut, par une face supérieure ou dessus 16 plate, légèrement convexe, coupant le plan 7 approximativement perpendiculairement à celui-ci et constituant une surface de roulement pour des véhicules ferroviaires, et par deux chants 17, approximativement plans, approximativement parallèles au plan 7 et mutuellement symétriques par rapport à celui-ci, chacun de ces chants 17 raccordant la face 16 à l'une, respective des demi-faces inférieures ou dessous 15.

Les notions de dessus et de dessous s'entendent ici par référence à une position de service des rails 2, dans laquelle le plan 7 présente une orientation approximativement verticale et qui constitue l'orientation dans laquelle s'effectue la soudure.

Le détail de la section transversale d'un tel rail 2 est bien connu en lui-même d'un Homme du métier, et ne sera de ce fait pas décrit davantage.

En vue de leur soudure mutuelle, de façon également connue en elle-même, les abouts 3 des deux rails 2 sont dressés, par exemple à la tronçonneuse, pour être plats et perpendiculaires au plan 7, et placés face à face, dans une relation de symétrie mutuelle par rapport à un plan transversal 18 qui se confond avec le plan de coupe I-I, en respectant l'intervalle 4 précité, dans lequel on coule le métal de soudure à l'état liquide, en provenance du creuset 5, avant de laisser ce métal de soudure se solidifier pour réaliser la soudure.

Le moule 6, de façon connue en elle-même, a pour rôle de retenir le métal ainsi coulé alors qu'il se présente encore à l'état liquide, et de le conformer de façon recherchée au fur et à mesure de sa solidification.

De façon également connue en elle-même, ce moule 6 est constitué, dans l'exemple illustré, de trois pièces principales, à savoir en particulier de deux pièces ou moitiés supérieures 19, au moins approximativement identiques, respectivement symétriques au moins approximativement par rapport au plan 18 et mutuellement symétriques par rapport au plan 7, le long duquel elles sont mutuellement jointives par une face plane 20 respective au-dessus du champignon 14 des rails 2 et de la partie correspondante de l'intervalle 14, alors que chacune d'entre elles présente en dessous de cette face 20, vers le plan 7, une face respective 21 conformée, d'une façon qui sera détaillée par la suite, pour envelopper chacun des deux rails, à proximité des abouts 3, et l'intervalle 4 dans des zones correspondant aux faces, demi-faces ou chants 16, 17, 15, 13, 11, 10, c'est-à-dire de toutes parts jusqu'au niveau de la face inférieure 9 du patin 8 et à l'exception de cette face inférieure 9, respectivement de part et d'autre du plan 7, par rapport auquel les faces 21 sont mutuellement symétriques.

En regard de cette face inférieure 9, les deux pièces ou moitiés supérieures 19 sont complétées par une troisième pièce, ou pièce de fond, 22, présentant la forme générale d'une plaque perpendiculaire au plan 7 et délimitée vers le haut par une face supérieure 23 conformée, d'une façon qui sera détaillée par la suite, de façon à longer la face inférieure 9 du patin 8 des deux rails à proximité des abouts 3, ainsi qu'en regard de la zone correspondante de l'intervalle 4, et à se raccorder, dans le sens d'un éloignement par rapport au plan 7, à la limite inférieure de chacune des faces 21 pour délimiter avec ces dernières, autour de l'intervalle 4 et d'une zone respective 24 de chaque rail 2, directement adjacente à son about 3, une empreinte de moulage 25 fermée de façon étanche au métal de soudure à l'état liquide, à des exceptions qui seront décrites par la suite, par appui continu des faces 21 et 23 contre les deux rails 2, dans des conditions qui seront décrites par la suite, dans une zone 26 respective de ces rails 2 située longitudinalement à l'opposé de l'about 3 correspondant par rapport à la zone 24 précitée, logée à l'intérieur de l'empreinte de moulage 25.

Chacune des pièces 19 et 22 présente par ailleurs une forme indifférente au regard de la présente invention, cette forme s'inscrivant par exemple dans un parallélépipède rectangle respectif mais définissant de préférence, par une face supérieure plane respective 27 de chacune des pièces ou moitiés supérieures 19, perpendiculaire au plan 18 ou approximativement perpendiculaire au plan 7, une face supérieure 28 du moule 6, propre à porter directement le creuset 5 conformément aux enseignements du brevet européen précité de la Demanderesse ; à cet effet, comme il est décrit dans ce brevet européen auquel on se référera avantageusement, les deux faces 27 forment entre elles un dièdre d'angle d'une valeur différente de 180° dans un but d'auto-centrage du creuset 5, conformé de façon complémentaire. Ces dispositions sont bien connues en elles-mêmes, et ne seront de ce fait pas décrites davantage.

De façon également connue en elle-même, chacune des moitiés supérieures 19 du moule 6 est creusée, dans ses faces 20 et 27 ainsi que dans une zone supérieure 30 de sa face 21, correspondant à la face supérieure ou dessus 16 du champignon 14 des rails 2 et à la zone correspondante de l'intervalle 4, d'une moitié respective 29 d'un canal 32 de coulée du métal de soudure à l'état liquide, en provenance du creuset 5, vers l'empreinte de moulage 25. Chacune des moitiés 29 étant symétrique par rapport au plan 18 et ces deux moitiés 29 étant mutuellement symétriques par rapport au plan 7, le canal 32 présente une symétrie d'ensemble par rapport à un axe 33 défini par l'intersection de ces plans 18 et 7, et débouche ainsi suivant cet axe 33, d'une part vers le haut dans la face supérieure 27 et d'autre part vers le bas dans la zone 30 des faces 21, par une embouchure respectivement supérieure 34 et inférieure 35, l'une et l'autre d'axe 33.

La conformation du canal 32 reste identique, dans un moule 6 selon l'invention, à ce qu'elle est dans les moules de l'Art antérieur et ne sera de ce fait pas davantage détaillée. De façon avantageuse, également connue en elle-même, les moitiés 29 du canal 32 sont conformées de façon à pouvoir recevoir et immobiliser, à un niveau intermédiaire entre les niveaux respectifs des embouchures 34 et 35, une pièce supplémentaire ou bouchon 36 réalisée comme les pièces 19 et 22 en un matériau réfractaire tel qu'un sable aggloméré, pour constituer à l'intérieur du canal 32 une chicane propre à éviter une chute directe du métal de soudure à l'état liquide, suivant l'axe 33, jusqu'à l'empreinte de moulage 25, et il est bien entendu que d'autres dispositions pourraient être choisies sans que l'on sorte pour autant du cadre de la présente invention.

De même, de façon connue en elle-même, chacune des pièces ou moitiés supérieures 19 du moule 6 est creusée, à l'opposé du plan 7 par rapport à la moitié 29 correspondante du canal 32, suivant un axe respectif 37 situé dans ce plan 18 mais se rapprochant du plan 7 vers le bas, d'une pipe tubulaire respective 38 qui débouche d'une part vers le haut, par une embouchure supérieure 39, dans la face supérieure 27 respective et d'autre part vers le bas, par une embouchure inférieure 40, dans une zone 41 de la face 21 respective située en regard d'une demi face supérieure ou dessus 11 correspondante du patin 8. De plus, selon un mode de réalisation préféré, chacune des pipes 38 débouche, à un niveau intermédiaire entre les niveaux respectifs de son embouchure supérieure 39 et de son embouchure inférieure 40, dans une zone 42 de la face 21 respective située en regard d'un chant 17 respectivement correspondant du champignon 14. A cet effet, suivant un même axe 43 perpendiculaire au plan 7 et situé dans un plan 44 perpendiculaire aux plans 7 et 18 et se confondant avec le plan de coupe III-III, entre chaque pipe 38 et la zone 42 de la face 21 de la même pièce ou moitié supérieure 19 est aménagé un passage tubulaire respectif 45 débouchant dans la zone 42 correspondante par une embouchure respective 46, ou embouchure latérale.

Ces dispositions sont également bien connues d'un Homme du métier et ne seront pas décrites davantage. De façon générale, les moitiés supérieures 19 et la pièce de fond 22 du moule 6 selon l'invention peuvent encore présenter d'autres dispositions bien connues en elles-mêmes, mais indifférentes au regard de la présente invention, telles que des découpes 47 aménagées dans la face supérieure 27 pour autoriser l'évacuation du corindon produit par la réaction aluminothermique, en fin de coulée du métal de soudure à l'état liquide, des passages 48 de circulation du métal de soudure à l'état liquide entre chacune des pipes 38 et la moitié correspondante 29 du canal 32, à un niveau intermédiaire entre les niveaux respectifs du bouchon 36 et de l'embouchure inférieure 35 du canal 32, dans chacune des moitiés supérieures 19, ou encore des protubérances 49 en saillie sur la face 23 de la pièce de fond 22 pour faciliter le positionnement mutuel des trois pièces 19 et 22 en s'emboîtant autour des moitiés supérieures 19, respectivement de part et d'autre de chacune dans le sens d'un éloignement par rapport au plan 18.

Les faces 21 et 23, qui définissent l'empreinte de moulage 25, peuvent elles-mêmes conserver leur conformation connue, selon laquelle, dans tout plan transversal de coupe, tel que le plan I-I, elles présentent un contour complémentaire de celui des faces, demi-faces ou chants respectivement correspondants d'un rail 2, augmenté d'un jeu d'espacement mutuel qui peut varier suivant ces faces, demi-faces ou chants, d'une part, et varie en direction longitudinale de façon à être plus faible en regard des zones 26 des rails 2 qu'entre ces zones, à savoir en regard des zones 24 et d'un prolongement géométrique 50 du contour des rails 4 autour de l'intervalle 4, d'autre part.

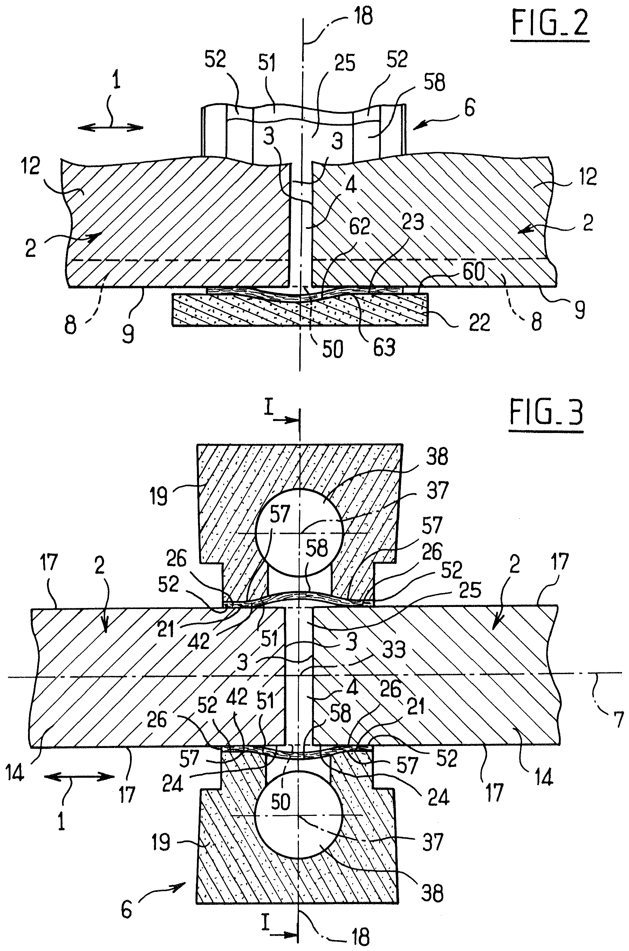

Ainsi, en ce qui concerne les moitiés supérieures 19 du moule 6 et comme il ressort de la figure 3, la face 21 présente une section concave, définie par une partie de surface 51 concave, présentant par exemple un contour en arc de cercle peu prononcé, en regard des zones 24 des rails 2 et du prolongement géométrique 50 de ces derniers, dans la zone 42, et il en est de même dans les autres zones de la face 21, à savoir sa zone 41 précitée, correspondant à la demi face supérieure ou dessus 11 du patin 8 du rail, une zone 53 située en regard du chant 10 correspondant, une zone 54 placée en regard de la face latérale 13 correspondante de l'âme 12, une zone 55 située en regard de la demi face inférieure ou dessous 15 correspondante du champignon 14 et une zone 56 correspondant à une partie marginale, correspondant à ce chant 17, de la face supérieure ou dessus 16 du champignon 14, bordant l'embouchure inférieure 35 du canal 32 dans le sens d'un éloignement par rapport au plan 7.

La partie de surface 51 est symétrique par rapport au plan 18 et, dans le sens d'un éloignement par rapport à celui-ci, se raccorde par une arête respective 57, sous un angle qui peut varier suivant les zones, à deux autres zones 52 de surface, dont chacune constitue une partie à une portée d'appui de la face 21 contre la zone 26 d'un rail 2 respectivement correspondant. Dans leur section, les zones 52 sont rectilignes et colinéaires, et la zone 51 forme entre elles un creux plus ou moins prononcé suivant les zones de la face 21.

D'une façon connue en elle-même, les parties de surface 52 prennent appui de façon continue contre la zone 26 du rail 2 correspondant non pas directement, mais par l'intermédiaire d'un revêtement 58 réfractaire, suffisamment compressible pour épouser au mieux la zone 26 correspondante et assurer ainsi une étanchéité, autour de l'empreinte 25, à l'encontre d'une fuite du métal de soudure à l'état liquide.

Conformément à la présente invention, ce revêtement 58 n'est pas limité aux parties de surface 52, mais s'étend de façon continue de l'une à l'autre en longeant, entre elles, la partie de surface 51 correspondante, et définit ainsi l'empreinte de moulage 25 en regard des zones 24 des rails 2 et de l'intervalle 4 entre eux, dans les différentes zones de chacune des faces 21.

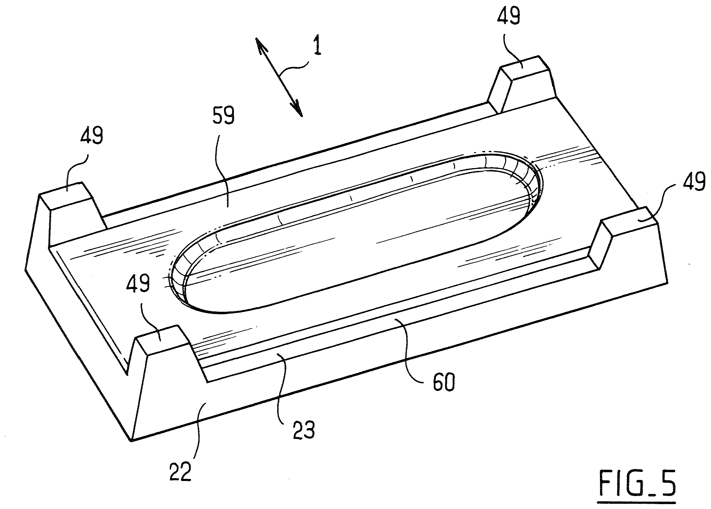

De même, la face supérieure 23 de la pièce de fond 22, comme le montrent plus particulièrement les figures 2 et 5, est pratiquement intégralement recouverte, entre les protubérances 49, par un revêtement 59 en tout point similaire au revêtement 58.

Plus précisément, la face 23 présente une partie périphérique de surface 60 plane, qui vient en appui d'une part contre un épaulement plan 61, perpendiculaire aux plans 18 et 7 et tourné vers le bas, que chacune des moitiés supérieures 19 présente et qui se raccorde vers le plan 7 à la zone 53 de la face 21 correspondante, et d'autre part contre la face inférieure 9 du patin 8 des deux rails 2, dans la zone 26 respectivement correspondante.

Cette partie périphérique plane 60 entoure de toutes parts une partie de surface 62 de la face 23, laquelle partie de surface 62 est concave et se raccorde à la partie de surface 60 par une arête périphérique 63 continue. La partie de surface 62 est placée en regard de la face inférieure 9 du patin 8 des deux rails 2, dans leurs zones 24, et de l'intervalle 4, en dessous de celui-ci.

Le revêtement 59 s'étend de façon continue sur la totalité de la partie de surface 62, à l'intérieur de la partie périphérique 60, pour délimiter l'empreinte de moulage 25 en dessous du patin 8 des rails 2 et de l'intervalle 4 entre leurs abouts 3, et sur la partie de surface 60, tout autour de la partie de surface 62, pour créer une étanchéité de contact avec la face inférieure 9 des deux rails 2, dans leurs zones 26, ainsi qu'avec le revêtement 58 de la zone 53 de chaque face 21, le revêtement 59 s'étendant de préférence jusqu'entre la partie périphérique 60 de la face 23 et chacun des épaulements 61.

L'empreinte 25 est ainsi fermée de façon étanche et intégralement délimitée par les revêtements 58 et 59, si ce n'est que, de préférence, le revêtement 58 de la face 21 de chacune des moitiés supérieures 19 du moule 6 est interrompu de façon étroitement localisée en regard de l'embouchure inférieure 40 de la pipe 38 correspondante, dans la zone 41 de la face 21, ainsi que face à l'embouchure inférieure 35 du canal 32.

Par contre, de façon préférée, ce revêtement 58 s'étend de façon continue en regard de l'embouchure latérale 46 de cette pipe 38, et il est réalisé dans un matériau réfractaire présentant une température de fusion déterminée, intermédiaire entre une première température déterminée, par exemple de l'ordre de 1000° C, à laquelle s'effectue le préchauffage de l'empreinte 25, de façon connue en elle-même, avant la coulée du métal de soudure à l'état liquide, et une deuxième température déterminée, supérieure à la première et par exemple de l'ordre de 2000° C, à laquelle le métal de soudure à l'état liquide parvient ensuite dans l'empreinte 25. Ainsi, on a obtenu de bons résultats aux essais en utilisant comme revêtements 58 et 59 un feutre de fibres réfractaires, liées par un liant réfractaire, du type commercialisé par la même Société UNIFRAX sous la dénomination ISOFRAX® 1260 C, présentant une teneur en silice de l'ordre de 70 à 80 % en poids et une teneur en magnésie de l'ordre de 18 à 27 % en poids, collé sur la totalité de sa surface, aux faces 21 des moitiés supérieures 19 du moule 6 et à la face supérieure 23 de la pièce de fond 22 de celui-ci, au moyen d'une colle commercialisée par la Société sous la dénomination FIXWOOL FX, mais il est bien entendu que d'autres produits pourraient être choisis sans que l'on sorte pour autant du cadre de la présente invention.

Les avantages d'un tel choix de la température de fusion du matériau constitutif des revêtements 58 et 59, étant entendu que ce choix concerne également la colle utilisée pour leur solidarisation aux différentes pièces 19 et 23 du moule 6, ont été développés en préambule.

Le choix particulier des matériaux indiqués ci-dessus présente en outre un avantage supplémentaire en ce qu'il permet d'obtenir non seulement une certaine compressibilité des revêtements 58 et 59, mais également une possibilité d'ajuster la forme de ces derniers par grattage, par exemple en utilisant à cet effet une friction contre un coupon que l'on a détaché des rails 2 pour y dresser les abouts 3, ou encore une lime, pour adapter au mieux la conformation des revêtements 58 et 59, au niveau des parties de surface 52 et 60, à la géométrie précise des zones 26 des rails 2, lors de la préparation de la soudure sur site, afin d'établir un contact d'étanchéité mutuelle aussi bon que possible.

Le lutage s'en trouve encore davantage limité à une simple précaution, et l'on évite que des bavures de métal en fusion viennent souiller localement les rails 2 en dehors de la soudure proprement dite.

Naturellement, de tels avantages se retrouveront dans le cas de la soudure de rails présentant un profil différent du profil Vignole qui a été illustré, et dans le cas de moules présentant une conception différente de la conception en trois pièces qui vient d'être décrite, et l'Homme du métier pourra adapter à chaque cas les dispositions qui viennent d'être décrites, sans rencontrer de difficulté et sans sortir pour autant du cadre de la présente invention.

## Revendications

1. Moule pour la soudure aluminothermique de rails (2) de chemin de fer, du type comportant plusieurs pièces (19, 22) en matériau réfractaire rigide, susceptibles d'être assemblées temporairement autour de deux abouts (3) de rail (2) à souder en définissant chacune, par des parties de surface respectives (51, 52, 60, 62), mutuellement adjacentes:
- une partie respective d'une empreinte de moulage (25), ouverte vers le haut, agencée pour recevoir par coulée un métal de soudure à l'état liquide et enveloppant les deux abouts (3), un intervalle (4) ménagé entre eux et une première zone (24) de chaque rail (2), immédiatement voisine de l'about (3) correspondant, pour communiquer une forme déterminée au métal de soudure pendant sa solidification,
- une partie respective de chacune de deux portées continues agencées pour prendre appui contre une deuxième zone (26) de chaque rail (2) immédiatement voisine de la première zone (24) de celui-ci, à l'opposé de l'about (3) correspondant par rapport à cette première zone (24),
les parties de surface (52, 60) de chaque pièce (19, 22) qui définissent des parties des deux portées d'appui étant disposées respectivement de part et d'autre de la partie de surface (51, 62) de cette pièce (19, 22) qui définit une partie de l'empreinte de moulage (25) et portant solidairement un revêtement compressible (58, 59) d'étanchéification dudit appui à l'encontre du métal de soudure à l'état liquide,
**caractérisé en ce que** la partie de surface (51, 62) de chaque pièce (19, 22) qui définit une partie de l'empreinte de moulage (25) se raccorde directement à chacune des parties de surface (52, 60) de cette pièce (19, 22) qui définissent des parties des deux portées d'appui et porte également solidairement ledit revêtement compressible (58, 59), qui s'étend de façon continue de l'une à l'autre des parties de surface (52, 60) de cette pièce (19, 22) qui définissent des parties des deux portées d'appui.

2. Moule selon la revendication 1, **caractérisé en ce que** le revêtement (58, 59) est fixé solidairement de façon continue, répartie sur la totalité des parties de surface (51, 52, 60, 62) de la pièce correspondante (19, 22) qui définissent respectivement une partie de l'empreinte et une partie des deux portées d'appui.

3. Moule selon l'une quelconque des revendications 1 et 2, **caractérisé en ce que** le revêtement (58, 59) comporte un feutre de fibres réfractaires liées par un liant réfractaire, collé au moyen d'une colle réfractaire aux parties de surface (51, 52, 60, 62) de la pièce correspondante (19, 22) qui définissent respectivement une partie de l'empreinte et une partie des deux portées d'appui.

4. Moule selon l'une quelconque des revendications 1 à 3, **caractérisé en ce que** le revêtement (58, 59) présente une température de fusion comprise entre 1000 et 2000°C.

5. Moule selon l'une quelconque des revendications 1 à 4, **caractérisé en ce que** lesdites pièces (19) comportent des moyens (29) pour définir un canal (32) de coulée du métal de soudure à l'état liquide dans l'empreinte (25), débouchant d'une part vers le haut dans une face supérieure (28) du moule (6) et d'autre part vers le bas dans une zone supérieure (30) de l'empreinte (25), et **en ce que** ledit revêtement (58) est interrompu en regard de l'embouchure (35) du canal (32) dans la zone supérieure (30) de l'empreinte (25).

6. Moule selon la revendication 5, **caractérisé en ce que** lesdites pièces (19) comportent au moins une pipe (38) de remontée de gaz et de métal de soudure à l'état liquide, débouchant d'une part vers le haut dans ladite face supérieure (28) du moule (6) et d'autre part vers le bas dans une zone inférieure (41) de l'empreinte (25), et **en ce que** ledit revêtement (58) est interrompu en regard de l'embouchure (40) de la ou chaque pipe (38) dans la zone inférieure (41) de l'empreinte (25).

7. Moule selon la revendication 6 dans sa relation de dépendance vis-à-vis de la revendication 4, **caractérisé en ce que** la ou chaque pipe (38) débouche en outre latéralement dans l'empreinte (25) à un niveau intermédiaire de celle-ci, et **en ce que** le revêtement (58) s'étend de façon continue en regard de l'embouchure (46) de la ou chaque pipe (38) dans l'empreinte (25) audit niveau intermédiaire de celle-ci.

8. Moule selon l'une quelconque des revendications 1 à 7, **caractérisé en ce que** lesdites pièces (19, 22) comportent deux pièces (19) au moins approximativement identiques, destinées à être placées respectivement de part et d'autre de chaque rail (2) et dont lesdites parties de surface (51, 52) sont conformées pour s'adapter au moins autour de l'âme (12), du dessus (11) du patin (8), du dessous (15) et du côté (17) du champignon (14) de chaque rail (2).

9. Moule selon la revendication 8, **caractérisé en ce que** lesdites pièces (19, 22) comportent une troisième pièce (22), destinée à être placée en dessous de chaque rail (2) et dont lesdites parties de surface (60, 62) sont conformées pour s'adapter en dessous du patin (8) de chaque rail (2), dans des conditions telles que le revêtement (59) de la troisième pièce soit jointif du revêtement (58) desdites pièces (19), de façon étanche au métal de soudure à l'état liquide.

10. Moule selon l'une quelconque des revendications 1 à 9, **caractérisé en ce que** ledit matériau réfractaire rigide est un sable aggloméré.

## Patentansprüche

1. Form für die aluminothermische Schweißung von Eisenbahnschienen (2) vom Typ umfassend mehrere Stücke (19, 22) aus starrem hitzebeständigem Material, die vorübergehend um zwei zu schweißende Schienenendstücke (3) montiert werden können, indem jedes durch jeweilige (51, 52, 60, 62), gegenseitig benachbarte Oberflächenteile definiert wird:
- ein jeweiliges Stück eines Formabdrucks (25), das nach oben offen ist, das angeordnet ist, um durch Gießen ein Schweißmetall in flüssigem Zustand zu empfangen und die zwei Endstücke (3) umschließt, ein Intervall (4), das zwischen ihnen und einem ersten Bereich (24) jeder Schiene (2) angebracht ist, die unmittelbar dem entsprechenden Endstück (3) benachbart ist, um dem Schweißmetall während seiner Verfestigung eine bestimmte Form zu übertragen,
- einen entsprechenden Teil jedes der zwei durchgehenden Abschnitte, die angeordnet sind, um gegen einen zweiten Bereich (26) jeder Schiene (2), der unmittelbar dem ersten Bereich (24) dieser benachbart ist, des entsprechenden Endstücks (3) mit Bezug auf diesen ersten Bereich (24) in Auflage zu kommen,
wobei die Oberflächenteile (52, 60) jedes Stücks (19, 22), die Teile der zwei Auflageabschnitte definieren, jeweils auf beiden Seiten des Oberflächenteils (51, 62) dieses Stücks (19, 22) angeordnet sind, der einen Teil des Formabdrucks (25) definiert und fest verbunden eine komprimierbare Beschichtung (58, 59) zur Abdichtung der Auflage gegen das Schweißmaterial in flüssigem Zustand trägt,
**dadurch gekennzeichnet, dass** sich der Oberflächenteil (51, 62) jedes Stücks (19, 22), der einen Teil der Formabdrucks (25) definiert, direkt mit jedem der Oberflächenteile (52, 60) dieses Stücks (19, 22) verbindet, die Teile der zwei Auflageabschnitte definieren, und ebenfalls fest verbunden die komprimierbare Beschichtung (58, 59) trägt, die sich auf durchgehende Weise von einem zum anderen der Oberflächenteile (52, 60) Stücks (19, 22) erstreckt, die Teile der zwei Auflageabschnitte definieren.

2. Form nach Anspruch 1, **dadurch gekennzeichnet, dass** die Beschichtung (58, 59) fest verbunden auf durchgehende Weise fixiert ist, verteilt auf der Gesamtheit der Oberflächenteile (51, 52, 60, 62) des entsprechenden Stücks (19, 22), die jeweils einen Teil des ersten Abdrucks und einen Teil der Auflageabschnitte definieren.

3. Form nach einem der Ansprüche 1 und 2, **dadurch gekennzeichnet, dass** die Beschichtung (58, 59) einen Filz aus hitzebeständigen Fasern umfasst, die durch ein hitzebeständiges Bindemittel gebunden sind, das mit Hilfe eines hitzebeständigen Klebstoffs an die Oberflächenteile (51, 52, 60, 62) des entsprechenden Stücks (19, 22) geklebt sind, die jeweils einen Teil des ersten Abdrucks und einen Teil der Auflageabschnitte definieren.

4. Form nach einem der Ansprüche 1 bis 3, **dadurch gekennzeichnet, dass** die Beschichtung (58, 59) eine Schmelztemperatur im Bereich zwischen 1000 und 2000 °C aufweist.

5. Form nach einem der Ansprüche 1 bis 4, **dadurch gekennzeichnet, dass** die Stücke (19) Mittel (29) umfassen, um einen Kanal (32) zum Gießen des Schweißmetalls in flüssigem Zustand im Abdruck (25) zu definieren, der einerseits nach oben in eine obere Seite (28) der Form (6) und andererseits nach unten in einen oberen Bereich (30) des Abdrucks (25) mündet, und dadurch, dass die Beschichtung (58) gegenüber der Mündung (35) des Kanals (32) im oberen Bereich (30) des Abdrucks (25) unterbrochen ist.

6. Form nach Anspruch 5, **dadurch gekennzeichnet, dass** die Teile (19) mindestens ein Rohr (38) zum Aufstieg von Gas und Schweißmetall in flüssigem Zustand umfasst, das einerseits nach oben in die obere Seite (28) der Form (6) und andererseits nach unten in einen unteren Bereich (41) des Abdrucks (25) mündet, und dadurch, dass die Beschichtung (58) gegenüber der Mündung (40) des oder jedes Rohrs (38) im unteren Bereich (41) des Abdrucks (25) unterbrochen ist.

7. Form nach Anspruch 6 in seiner Abhängigkeitsbeziehung gegenüber Anspruch 4, **dadurch gekennzeichnet, dass** das oder jedes Rohr (38) außerdem seitlich in den Abdruck (25) auf einem Zwischenniveau desselben mündet, und dadurch, dass sich die Beschichtung (58) auf durchgehende Weise gegenüber der Mündung (46) des oder jedes Rohrs (38) im Abdruck (25) auf dem Zwischenniveau desselben erstreckt.

8. Form nach einem der Ansprüche 1 bis 7, **dadurch gekennzeichnet, dass** die Stücke (19, 22) zwei mindestens annähernd identische Stücke (19) umfassen, die ausgelegt sind, um jeweils auf beiden Seiten jeder Schiene (2) platziert zu sein, und wobei die Oberflächenteile (51, 52) ausgebildet sind, um sich mindestens um den Kern (12), die Oberseite (11) der Kufe (8), die Unterseite (15) und die Seite (17) des Kopfes (14) jeder Schiene (2) anzupassen.

9. Form nach Anspruch 8, **dadurch gekennzeichnet, dass** die Stücke (19, 22) ein drittes Stück (22) umfassen, das ausgelegt ist, um unter jeder Schiene (2) platziert zu sein, und wobei die Oberflächenteile (60, 62) ausgebildet sind, um sich unter der Kufe (8) jeder Schiene (2) unter derartigen Bedingungen anzupassen, dass die Beschichtung (59) des dritten Stücks mit der Beschichtung (58) der Stücke (19) auf dichte Weise mit dem Schweißmaterial in flüssigem Zustand verbunden ist.

10. Form nach einem der Ansprüche 1 bis 9, **dadurch gekennzeichnet, dass** das starre hitzebeständige Material gepresster Sand ist.

## Claims

1. Mould for the aluminothermic welding of railway rails (2), of the type comprising a plurality of parts (19, 22) made from rigid refractory material, able to be assembled temporarily around two ends (3) of rails (2) to be welded, each defining, by respective surface portions (51, 52, 60, 62), mutually adjacent:
- a respective portion of a moulding cavity (25), open towards the top, arranged to receive by pouring a weld metal in the liquid state and enveloping the two ends (3), a gap (4) provided between them and a first zone (24) of each rail (2), immediately adjacent to the corresponding end (3), for communicating a given shape to the weld metal during solidification thereof,
- a respective portion of each of two continuous spans arranged so as to abut against a second zone (26) of each rail (2) immediately adjacent to the first zone (24) thereof, opposite the corresponding end (3) with respect to this first zone (24),
the surface portions (52, 60) of each part (19, 22) that define portions of the two abutment spans being disposed respectively on either side of the surface portion (51, 62) of this part (19, 22) that defines a portion of the moulding cavity (25) and carrying integrally a compressible cladding (58, 59) for sealing said abutment against the weld metal in the liquid state,
**characterised in that** the surface portion (51, 62) of each part (19, 22) that defines a portion of the moulding cavity (25) is connected directly to each of the surface portions (52, 60) of this part (19, 22) that define portions of the two abutment spans and also carries integrally said compressible cladding (58, 59), which extends continuously from one to the other of the surface portions (52, 60) of this part (19, 22) that define portions of the two abutment spans.

2. Mould according to claim 1, **characterised in that** the cladding (58, 59) is securely fixed continuously, distributed over the whole of the surface portions (51, 52, 60, 62) of the corresponding part (19, 22) that define respectively a portion of the cavity and a portion of the two abutment spans.

3. Mould according to either claim 1 or claim 2, **characterised in that** the cladding (58, 59) comprises a felt of refractory fibres bound by a refractory binder, bonded by means of a refractory glue to the surface portions (51, 52, 60, 62) of the corresponding part (19, 22) that define respectively a portion of the cavity and a portion of the two abutment spans.

4. Mould according to any of claims 1 to 3, **characterised in that** the cladding (58, 59) has a melting point of between 1000° and 2000°C.

5. Mould according to any of claims 1 to 4, **characterised in that** said parts (19) comprise means (29) for defining a channel (32) for pouring weld metal in the liquid state into the cavity (25), emerging firstly upwards in a top face (28) of the mould (6) and secondly downwards in a top zone (30) of the cavity (25), and **in that** said cladding (58) is interrupted opposite the mouth (35) of the channel (32) in the top zone (30) of the cavity (25).

6. Mould according to claim 5, **characterised in that** said parts (19) comprise at least one pipe (38) for the ascent of gas and weld metal in the liquid state, emerging firstly upwards in said top face (28) of the mould (6) and secondly downwards in the bottom zone (41) of the cavity (25), and **in that** said cladding (58) is interrupted opposite the mouth (40) of the or each pipe (38) in the bottom zone (41) of the cavity (25) .

7. Mould according to claim 6 in its relationship of dependency vis-à-vis claim 4, **characterised in that** the or each pipe (38) further emerges laterally in the cavity (25) at an intermediate level thereof, and **in that** the cladding (58) extends continuously opposite the mouth (46) of the or each pipe (38) in the cavity (25) at said intermediate level thereof.

8. Mould according to any of claims 1 to 7, **characterised in that** said parts (19, 22) comprise two parts (19) at least approximately identical, intended to be placed respectively on either side of each rail (2) and said surface portions (51, 52) of which are conformed to fit at least around the web (12), the top (11) of the base (8), and the bottom (15) and side (17) of the head (14) of each rail (2).

9. Mould according to claim 8, **characterised in that** said parts (19, 22) comprise a third part (22), intended to be placed under each rail (2) and said surface portions (60, 62) of which are conformed to fit below the base (8) of each rail (2), under conditions such that the cladding (59) of the third part is contiguous with the cladding (58) of said parts (19), so as to be impervious to the weld metal in the liquid state.

10. Mould according to any of claims 1 to 9, **characterised in that** said rigid refractory material is a bonded sand.
